# EUROPÄISCHE PATENTSCHRIFT

(11) **EP 3 179 067 B1**
(45) Veröffentlichungstag und Bekanntmachung des Hinweises auf die Patenterteilung: **20.02.2019**
(21) Anmeldenummer: 16002403.0
(22) Anmeldetag: 14.11.2016
(51) Int. Cl.: F02B 29/04, F02B 37/00, F02M 25/022, F02M 25/028, F02M 35/08, F02M 35/10, F01D 25/32, F02C 6/12

(54) **ABGASTURBOLADER FÜR EIN KRAFTFAHRZEUG**
TURBOCHARGER FOR A VEHICLE
TURBOCOMPRESSEUR POUR UNE VÉHICULE

(30) Priorität: 11.12.2015 DE 102015016030
(43) Veröffentlichungstag der Anmeldung: 14.06.2017
(73) Patentinhaber: MAN Truck & Bus AG, 80995 München (DE)
(72) Erfinder: Hollweck, Johannes, 92237 Sulzbach-Rosenberg (DE)
(74) Vertreter: v. Bezold & Partner Patentanwälte - PartG mbB

(56) Entgegenhaltungen:
- WO-A1-2006/045488
- WO-A1-2015/098550
- DE-A1- 10 238 839
- DE-A1-102008 045 685
- DE-A1-102011 108 458
- US-A1- 2008 226 445
- US-A1- 2009 205 326
- US-A1- 2012 174 576

## Beschreibung

Die Erfindung betrifft einen Abgasturbolader für ein Kraftfahrzeug mit einer aufgeladenen Brennkraftmaschine und einem Ladeluftkühler.

Um eine Leistungssteigerung eines Verbrennungsmotors zu erzielen, kann die der Verbrennung zuzuführende Luft beispielsweise mit einem Turbolader verdichtet werden, bevor sie den Brennkammern des Verbrennungsmotors zugeführt wird. Die Verdichtung der Luft bringt jedoch gleichzeitig eine Erwärmung derselben mit sich, die für einen optimalen Ablauf des Verbrennungsprozesses nachteilig ist. Beispielsweise kann dadurch eine verfrühte Zündung oder eine erhöhte Stickoxidemission ausgelöst werden. Um die nachteiligen Folgen der Verbrennung zugeführter überhitzter Luft zu vermeiden, ist es bekannt, einem Turbolader einen als Ladeluftkühler ausgebildeten Wärmetauscher nachzuschalten, mit dem die komprimierte Luft vor ihrer Verbrennung auf eine zulässige Temperatur abgekühlt werden kann.

Bei derartigen ladeluftgekühlten Motoren bildet sich unter Umständen, beispielsweise bei besonders bei niedriger Last oder niedrigen Außentemperaturen, Kondensat, z. B. Kondenswasser. Derartiges Kondensat kann ab einer bestimmten Menge, wenn es innerhalb der ladeluftführenden Teile bleibt, zu Schäden am Motor führen, wie beispielsweise durch Eisbildung, Wasserschlag oder Korrosion. Dieses Kondensat ist daher schadlos abzuführen. Aus dem Stand der Technik sind hierfür Ansätze bekannt, die eine Ableitung des Kondensats aus dem Ladeluftkühler ermöglichen. Ein derartiger Ansatz ist beispielsweise in der Offenlegungsschrift DE 102 38 839 A1 offenbart. Ein Nachteil dieses Ansatzes ist, dass bei einem Motorkonzept, bei dem die Ladeluftführung zwischen Ladeluftkühler und Turbolader kontinuierlich fallend ausgeführt ist, dennoch eine Kondensat-Ansammlung außerhalb des Ladeluftkühlers entstehen kann.

Das Dokument WO 2006/045488 zeigt einen Abgasturbolader mit einem Kondensatablauf. Es ist somit eine Aufgabe der Erfindung, eine verbesserte Möglichkeit bereitzustellen, bei einem ladeluftgekühlten Motor eine Kondensat-Ableitung zu ermöglichen, mit der Nachteile herkömmlicher Techniken vermieden werden können. Der Erfindung liegt insbesondere die Aufgabe einer einfachen, kostensparenden und zuverlässigen Kondensat-Ableitung bei einem Motorkonzept zugrunde, bei dem die Ladeluftführung vom Ladeluftkühler zum Turboladerverdichter kontinuierlich fallend bzw. vom Turboladerverdichter hin zum Ladeluftkühler kontinuierlich steigend ausgeführt ist.

Diese Aufgaben werden durch Vorrichtungen mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß allgemeinen Gesichtspunkten der Erfindung wird ein Abgasturbolader für ein Kraftfahrzeug, insbesondere für ein Nutzfahrzeug, bereitgestellt, wobei ein Verdichter des Abgasturboladers eine Öffnung zum Ablass eines Kondensats aufweist, die in einem untersten Bereich eines Ladeluft-Strömungswegs des Verdichters angeordnet ist. Die Öffnung wird nachfolgend als Kondensat-Ablass-Öffnung bezeichnet. Der unterste Bereich des Ladeluft-Strömungswegs des Verdichters entspricht der geodätisch tiefsten Stelle des Strömungswegs. Der unterste Bereich bzw. die geodätisch tiefste Stelle bezieht sich auf die Ausrichtung des Abgasturboladers, die er in montiertem Zustand am Fahrzeug annimmt. Es ist somit diejenige Stelle, die im montierten Zustand des Abgasturboladers den geringsten Abstand zur Fahrbahn aufweist.

Die Kondensat-Ablass-Öffnung kann an einem Verdichtergehäuse des Abgasturboladers vorgesehen sein, insbesondere an einer untersten Stelle oder geodätisch tiefsten Stelle des Verdichtergehäuses. Die Kondensat-Ablass-Öffnung kann beispielsweise an der geodätisch tiefsten Stelle der Druckspirale des Verdichters angeordnet sein.

Ein derartiger Abgasturbolader ist besonders vorteilhaft für Motor- bzw. Fahrzeugkonzepte, deren Ladeluftführung zwischen Ladeluftkühler und Turbolader kontinuierlich fallend ausgeführt ist, d. h., die Ladeluftführung ausgehend vom Ladeluftausgang des Verdichters hin zum Ladelufteingang des Ladeluftkühlers ist durchgehend steigend ausgeführt. Bei einer derartigen Ladeluftführung kann das entstehende Kondensat, das sich am tiefsten Punkt der Ladeluftführung sammelt, auf einfache und zuverlässige Weise über die erfindungsgemäße Kondensat-Ablass-Öffnung abgeleitet werden.

Vorzugsweise ist ein Durchmesser dieser Kondensat-Ablass-Öffnung klein im Vergleich zum Durchmesser der Ladeluftleitung, um keine oder zumindest nur eine geringe Beeinträchtigung des Wirkungsgrades des Abgasturboladers zu bewirken. Besonders vorteilhaft ist es, die Kondensat-Ablass-Öffnung als Anschluss für eine Kondensat-Abführleitung auszuführen. Hierzu kann die Kondensat-Ablass-Öffnung ein Gewinde aufweisen und/oder als Schlauchstutzen ausgeführt sein.

Bis auf die erfindungsgemäße Kondensat-Ablass-Öffnung kann der Abgasturbolader sonst in an sich bekannter Weise ausgeführt sein. Der Abgasturbolader kann eine Abgasturbine, den Verdichter und eine Antriebswelle umfassen, wobei die Abgasturbine und der Verdichter über die Antriebswelle bewegungsgekoppelt sind.

Gemäß einem weiteren Gesichtspunkt der Erfindung wird eine Antriebsvorrichtung für ein Kraftfahrzeug, insbesondere für ein Nutzfahrzeug, bereitgestellt, die einen Abgasturbolader wie in diesem Dokument beschrieben umfasst. Die Antriebsvorrichtung umfasst ferner eine durch den Abgasturbolader aufgeladene Brennkraftmaschine, einen Ladeluftkühler zu Kühlung von durch den Verdichter des Abgasturboladers verdichteter Ladeluft und eine erste Ladeluftführung, z. B. in Form einer ersten Ladeluftleitung, die einen Ladeluftausgang des Verdichters mit einem Ladelufteingang des Ladeluftkühlers verbindet. Die erste Ladeluftleitung kann ausgehend vom Ladeluftausgang des Verdichters hin zum Ladelufteingang des Ladeluftkühlers durchgehend steigend ausgeführt sein. Mit anderen Worten bewegt sich die in der ersten Ladeluftleitung geförderte Ladeluft stets nach oben, d. h. entgegen der Schwerkraft, so dass der geodätisch tiefste Punkt der ersten Ladeluftleitung die Anschlussstelle dieser Ladeluftleitung am Verdichter ist.

Die Antriebsvorrichtung kann eine Leitung umfassen, die an einem Ende an der Kondensat-Ablass-Öffnung angeschlossen ist und am anderen Ende in eine zweite Ladeluftleitung mündet, welche durch den Ladeluftkühler gekühlte Ladeluft der Brennkraftmaschine zuführt. Diese Leitung wird nachfolgend als Kondensat-Abführleitung bezeichnet. Ein besonderer Vorzug dieser Ausführungsvariante liegt darin, dass abgeleitetes Kondensat automatisch der Brennkraftmaschine zugeführt und dort mit verbrannt wird. Hierbei ist anzumerken, dass im Verdichter des Abgasturboladers, insbesondere am Ausgang der Druckspirale des Verdichters, in der Regel ein höherer Gasdruck herrscht als in der zweiten Ladeluftleitung nach dem Ladeluftkühler und vor Eintritt in die Brennkraftmaschine. Aufgrund dieses Differenzdrucks ergibt sich eine kontinuierliche Strömung innerhalb der Kondensat-Abführleitung hin zur Brennkraftmaschine, so dass abgezweigtes Kondensat in der Regel nicht wieder zurück in den Verdichter läuft, sondern zuverlässig in die Brennkraftmaschine gefördert wird.

Hierbei kann die Kondensat-Abführleitung direkt an einem Ladelufteingang der Brennkraftmaschine oder unmittelbar vor dem Ladelufteingang in die zweite Ladeluftleitung münden.

Gemäß einer weiteren bevorzugten Ausführungsform kann die Kondensat-Abführleitung ein Reservoir zur Aufnahme von Kondensat aufweisen. Das Reservoir kann beispielsweise als Vertiefung in der Kondensat-Abführleitung oder als Auffangbehälter ausgeführt sein. Diese Ausführungsform bietet den Vorteil, dass auch in bestimmten Betriebszuständen, in denen nicht sichergestellt werden kann, dass das abgezweigte Kondensat kontinuierlich über die Kondensat-Abführleitung hin zur Brennkraftmaschine gefördert wird, ein Rücklaufen des abgezweigten Kondensats in den Verdichter vermieden wird.

Gemäß einer weiteren bevorzugten Ausführungsform kann in der Kondensat-Abführleitung ein Rücklaufsperrventil angeordnet sein, welches ein Rückströmen von aus der Kondensat-Ablass-Öffnung ausgetretenem Kondensat oder Luft in den Verdichter verhindert. Auch diese Variante verhindert somit ein ungewolltes Rückströmen des abgezweigten Kondensats zurück in den Verdichter.

Besonders vorteilhaft ist es, wenn in der Kondensat-Abführleitung sowohl ein Reservoir zur Aufnahme von Kondensat als auch ein Rücklaufsperrventil angeordnet ist. Vorzugsweise ist in diesem Fall das Reservoir zwischen der Kondensat-Ablass-Öffnung und dem Rücklaufsperrventil angeordnet.

Eine weitere Möglichkeit der erfindungsgemäßen Realisierung sieht vor, dass die Kondensat-Abführleitung beheizbar ausgeführt ist. Dadurch wird ein Einfrieren der Kondensat-Abführleitung verhindert, was beispielsweise bei Temperaturen unterhalb 0° C denkbar wäre. Aus der Praxis sind beispielsweise Blow-by-Leitungen bzw. Kurbelgehäuse-Entlüftungsleitungen bekannt, die beheizt sind. In analoger Weise kann erfindungsgemäß auch die Kondensat-Abführleitung beheizt werden.

Gemäß einem weiteren Aspekt wird ein Kraftfahrzeug bereitgestellt, aufweisend einen Abgasturbolader wie in diesem Dokument beschrieben oder aufweisend eine Antriebsvorrichtung wie in diesem Dokument beschrieben. Das Kraftfahrzeug kann ein Nutzfahrzeug sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung einer Antriebsvorrichtung gemäß einer Ausführungsform der Erfindung;
- Figur 2a: eine vergrößerte Teilansicht der Ausführungsform; und
- Figur 2b: eine vergrößerte Teilansicht einer weiteren Ausführungsform der Erfindung.

Gleiche oder funktional äquivalente Elemente sind in allen Figuren mit denselben Bezugszeichen bezeichnet.

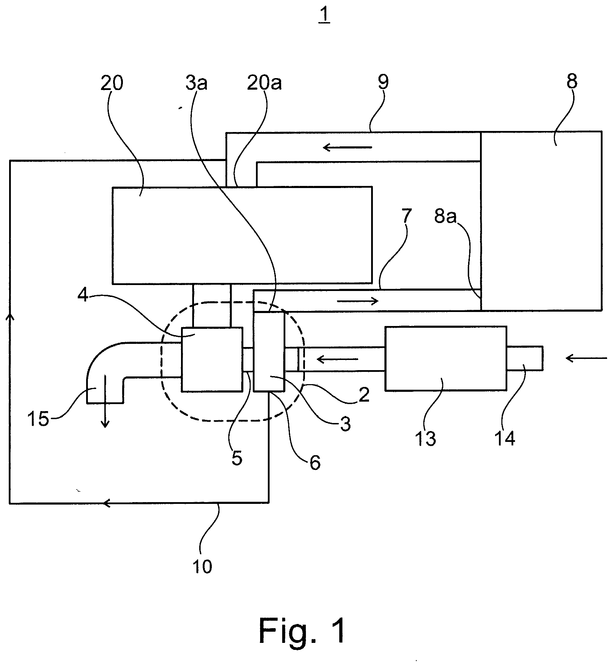

Figur 1 zeigt eine stark schematisierte Darstellung einer Antriebsvorrichtung 1 für ein Nutzfahrzeug. Die Antriebsvorrichtung 1 umfasst einen Verbrennungsmotor 20, der zur Leistungssteigerung mit einem Abgasturbolader 2 aufgeladen wird.

Der Abgasturbolader 2 umfasst einen Läufer, bestehend aus einer Turbine 4, einem Verdichter 3 und einer Antriebswelle 5. Die Turbine 4 und der Verdichter 3 sind über die Antriebswelle 5 bewegungsgekoppelt. Die Turbine 4 wird von einem Abgas des Verbrennungsmotors 20, das der Turbine 4 über die Abgasleitung 15 zugeführt wird, angetrieben. Dem Verdichter 3 wird über eine Zufuhrleitung 14 Frischluft zugeführt. Der Verdichter 3 verdichtet die dem Verbrennungsmotor 20 zuzuführende Ladeluft und steigert somit die Leistung des Verbrennungsmotors 20 im normalen befeuerten Betrieb.

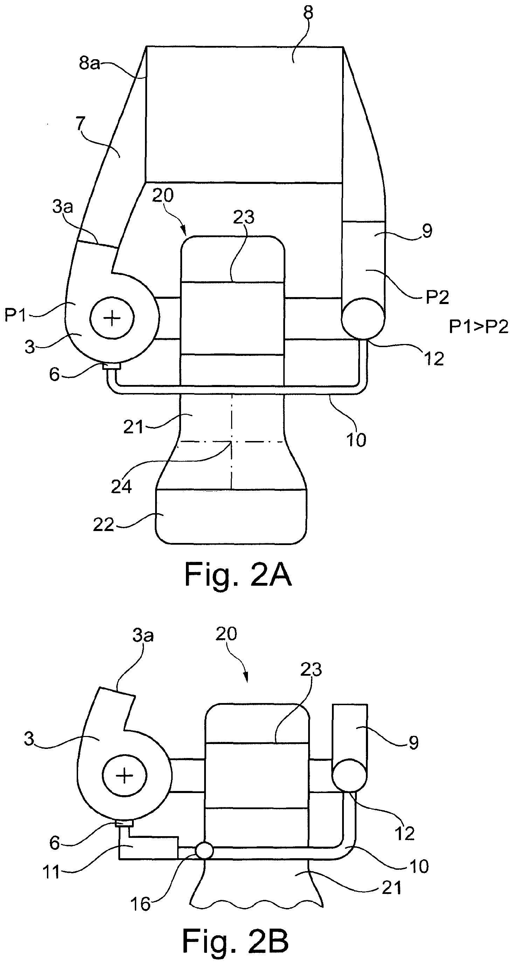

Die durch den Verdichter 3 verdichtete Ladeluft wird über eine erste Ladeluftleitung 7 einem Ladeluftkühler 8 zugeführt, der als Wärmetauscher fungiert und die Ladeluft kühlt. Die gekühlte Ladeluft wird anschließend über die zweite Ladeluftleitung 9 in den Verbrennungsmotor 20 eingespeist. Die erste Ladeluftleitung 7 ist ausgehend vom Ladeluftausgang 3a des Verdichters 3 hin zum Ladelufteingang 8a des Ladeluftkühlers 8 durchgehend steigend ausgeführt. Dies ist in der schematischen Darstellung der Figur 1 nicht dargestellt, jedoch in der vergrößerten Teilansicht der Figur 2A.

Die Figur 2A zeigt den Verbrennungsmotor 20 in einer Stirnansicht. Mit dem Bezugszeichen 21 ist das Kurbelgehäuse des Verbrennungsmotors 20 und mit dem Bezugszeichen 24 die Mittellinie der Kurbelwelle bezeichnet. Unterhalb des Kurbelgehäuses 21 befindet sich eine Ölwanne 22. Im oberen Bereich des Verbrennungsmotors 20 befindet sich der Zylinderkopfbereich 23, an dem das Ladeluftrohr 9 in den Verbrennungsmotor mündet. Der Ladelufteingang des Verbrennungsmotors 20 ist mit dem Bezugszeichen 20a bezeichnet.

Der Verdichter 3 des Abgasturboladers 2 weist in einem untersten Bereich eines Ladeluft-Strömungswegs des Verdichters 3 eine Öffnung zum Ablassen von Kondensat auf (Kondensat-Ablass-Öffnung 6). Die Kondensat-Ablass-Öffnung 6 ist an der geodätisch tiefsten Stelle des Verdichtergehäuses angebracht, insbesondere an der geodätisch tiefsten Stelle der Druckspirale des Verdichters 3. Die Kondensat-Ablass-Öffnung 6 ist als Anschluss für eine Leitung 10, nachfolgend als Kondensat-Abführleitung 10 bezeichnet, ausgeführt. Der Anschluss kann beispielsweise als Gewinde oder als Schlauchstutzen ausgeführt sein.

Die Kondensat-Abführleitung 10 ist somit an einem Ende an der Kondensat-Ablass-Öffnung 6 angeschlossen, und an ihrem anderen Ende mündet sie in die zweite Ladeluftleitung 9, die den Ladeluftausgang des Ladeluftkühlers 8 mit dem Ladelufteingang 20a des Verbrennungsmotors 20 verbindet.

Wie in Figur 2A ferner dargestellt ist, herrscht in der Druckspirale des Verdichters 3 ein höherer Druck P1 als in der zweiten Ladeluftleitung 9, d. h. in dem Bereich nach dem Ladeluftkühler 8 und vor Eintritt in den Verbrennungsmotor 20. Aufgrund des Differenzdrucks P1 - P2 ergibt sich eine kontinuierliche Strömung durch die Kondensat-Abführleitung 10 von der Kondensat-Ablass-Öffnung 6 hin zum Anschluss 12 in die zweite Ladeluftleitung.

Auf diese Weise wird aus dem Verdichter 3 abgeleitetes Kondensat kontinuierlich über die Kondensat-Abführleitung 10 zum Verbrennungsmotor 20 gefördert und dort verbrannt. Aufgrund des kontinuierlich fallenden Verlaufs der ersten Ladeluftleitung 7 vom Ladeluftkühler hin zum Verdichter 3 sammelt sich entstehendes Kondensat an der geodätisch tiefsten Stelle im Verdichter 3 und kann dort zuverlässig durch die vorgesehene Kondensat-Ablass-Öffnung 6 abgeleitet werden.

Figur 2B zeigt eine weitere Ausführungsform der Erfindung. Hierbei entsprechen Komponenten mit gleichen Bezugszeichen den Komponenten der Figur 1 und der Figur 2A und werden nicht gesondert beschriebenen.

Eine Besonderheit der in Figur 2B gezeigten Ausführungsvariante liegt darin, dass in der Kondensat-Abführleitung 10 im Bereich der Kondensat-Ablass-Öffnung 6 ein Reservoir 11 zur Aufnahme und zum Sammeln von Kondensat vorgesehen ist. Vorstehend wurde bereits festgestellt, dass in normalen Betriebszuständen normalerweise der Druck P1 am Ausgang der Druckspirale des Verdichters 3 größer ist als der Druck P2 in der zweiten Ladeluftleitung. Sollten jedoch Betriebszustände auftreten, wo dies nicht der Fall ist, kann durch das Reservoir 11 verhindert werden, dass bereits über die Kondensat-Ablass-Öffnung 6 aus dem Verdichter 3 abgezweigtes Kondensat wieder in den Verdichter zurückläuft. Stattdessen würde sich das Kondensat in dem Reservoir 11 sammeln.

Alternativ oder zusätzlich kann dies durch ein Rücklaufsperrventil 16 sichergestellt werden, das in der Kondensat-Abführleitung 10 vorgesehen ist. Das Rücklaufsperrventil 16 kann beispielsweise unmittelbar am Anschlussbereich der Kondensat-Abführleitung 10 zur Kondensat-Ablass-Öffnung 6 vorgesehen sein oder, wie in Figur 2B gezeigt, unmittelbar nach dem Reservoir 11, wobei das Reservoir 11 zwischen der Kondensat-Ablass-Öffnung 6 und dem Rücklaufsperrventil 16 angeordnet ist.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1: Antriebsvorrichtung
- 2: Abgasturbolader
- 3: Verdichter
- 3a: Ladeluftausgang des Verdichters
- 4: Turbine
- 5: Antriebswelle
- 6: Kondensat-Ablass-Öffnung
- 7: Ladeluftleitung
- 8: Ladeluftkühler
- 8a: Ladelufteingang des Ladeluftkühlers
- 9: Ladeluftleitung
- 10: Kondensat-Abführleitung
- 11: Reservoir
- 12: Leitungsanschluss
- 13: Luftfilter
- 14: Luftzufuhr
- 15: Abgasleitung
- 16: Rücklaufsperrventil
- 20: Brennkraftmaschine
- 20a: Ladelufteingang Brennkraftmaschine
- 21: Kurbelgehäuse
- 22: Ölwanne
- 23: Zylinderkopfbereich
- 24: Mittellinie der Kurbelwelle

## Patentansprüche

1. Abgasturbolader (2) für ein Kraftfahrzeug, wobei ein Verdichter (3) des Abgasturboladers (2)
- einen Ladelufteingang,
- einen Ladeluftausgang (3a) und
- eine Kondensat-Ablass-Öffnung (6) aufweist, die an der geodätisch tiefsten Stelle eines Ladeluft-Strömungswegs des Verdichters (3) angeordnet ist, **dadurch gekennzeichnet, dass** die Kondensat-Ablass-Öffnung (6) an der geodätisch tiefsten Stelle einer Druckspirale des Verdichters (3) angeordnet ist.

2. Abgasturbolader nach Anspruch 1, **dadurch gekennzeichnet, dass** die Kondensat-Ablass-Öffnung (6) an einem Verdichtergehäuse des Abgasturboladers (2), insbesondere an der geodätisch tiefsten Stelle des Verdichtergehäuses, vorgesehen ist.

3. Abgasturbolader nach Anspruch 1 oder 2, **dadurch gekennzeichnet, dass** die Kondensat-Ablass-Öffnung (6) als Anschluss für eine Kondensat-Abführleitung (10) ausgeführt ist.

4. Antriebsvorrichtung (1) für ein Kraftfahrzeug, insbesondere für ein Nutzfahrzeug, umfassend einen Abgasturbolader (2) nach einem der Ansprüche 1 bis 3, eine durch den Abgasturbolader (2) aufgeladene Brennkraftmaschine (20), einen Ladeluftkühler (8) zur Kühlung von durch den Verdichter (3) des Abgasturboladers (2) verdichteter Ladeluft und eine erste Ladeluftleitung (7), die einen Ladeluftausgang (3a) des Verdichters (3) mit einem Ladelufteingang (8a) des Ladeluftkühlers (8) verbindet.

5. Antriebsvorrichtung nach Anspruch 4, **dadurch gekennzeichnet, dass** die erste Ladeluftleitung (7) ausgehend vom Ladeluftausgang (3a) des Verdichters (3) hin zum Ladelufteingang (8a) des Ladeluftkühlers (8) durchgehend steigend ausgeführt ist.

6. Antriebsvorrichtung nach Anspruch 4 oder 5, **gekennzeichnet durch** eine Kondensat-Abführleitung (10), die an einem Ende an der Kondensat-Ablass-Öffnung (6) angeschlossen ist und am anderen Ende in eine zweite Ladeluftleitung (9) mündet, welche durch den Ladeluftkühler (8) gekühlte Ladeluft der Brennkraftmaschine (20) zuführt.

7. Antriebsvorrichtung nach Anspruch 6, **dadurch gekennzeichnet, dass** die Kondensat-Abführleitung (10) an einem Ladelufteingang (20a) der Brennkraftmaschine (20) oder unmittelbar vor dem Ladelufteingang (20a) in die zweite Ladeluftleitung (9) mündet.

8. Antriebsvorrichtung nach einem der Ansprüche 6 oder 7, **dadurch gekennzeichnet, dass** die Kondensat-Abführleitung (10) ein Reservoir (11) zur Aufnahme von Kondensat aufweist.

9. Antriebsvorrichtung nach einem der Ansprüche 6 bis 8, **dadurch gekennzeichnet, dass** in der Kondensat-Abführleitung (10) ein Rücklaufsperrventil (16) angeordnet ist, welches ein Rückströmen von aus der Kondensat-Ablass-Öffnung (6) ausgetretenem Kondensat oder ausgetretener Luft in den Verdichter (3) verhindert.

10. Antriebsvorrichtung nach den Ansprüchen 8 und 9, **dadurch gekennzeichnet, dass** das Reservoir (11) zwischen der Kondensat-Ablass-Öffnung (6) und dem Rücklaufsperrventil (16) angeordnet ist.

11. Antriebsvorrichtung nach einem der Ansprüche 6-10, **dadurch gekennzeichnet, dass** die Kondensat-Abführleitung (10) beheizbar ausgeführt ist.

12. Kraftfahrzeug, insbesondere Nutzfahrzeug, mit einem Abgasturbolader (3) nach einem der Ansprüche 1 bis 3 oder einer Antriebsvorrichtung (1) nach einem der Ansprüche 4 bis 11.

## Claims

1. Exhaust-gas turbocharger (2) for a motor vehicle, **wherein** a compressor (3) of the exhaust-gas turbocharger (2) has
- a charge-air inlet,
- a charge-air outlet (3a) and
- a condensate outlet opening (6) which is arranged at the geodetically lowest point of a charge-air flow path of the compressor (3), **characterized in that** the condensate outlet opening (6) is arranged at the geodetically lowest point of a pressure spiral of the compressor (3).

2. Exhaust-gas turbocharger according to Claim 1, **characterized in that** the condensate outlet opening (6) is provided on a compressor housing of the exhaust-gas turbocharger (2), in particular at the geodetically lowest point of the compressor housing.

3. Exhaust-gas turbocharger according to Claim 1 or 2, **characterized in that** the condensate outlet opening (6) is configured as a connection for a condensate discharge line (10).

4. Drive device (1) for a motor vehicle, in particular for a commercial vehicle, comprising an exhaust-gas turbocharger (2) according to one of Claims 1 to 3, an internal combustion engine (20) supercharged by the exhaust-gas turbocharger (2), a charge-air cooler (8) for cooling charge air compressed by the compressor (3) of the exhaust-gas turbocharger (2), and a first charge-air line (7) which connects a charge-air outlet (3a) of the compressor (3) to a charge-air inlet (8a) of the charge-air cooler (8).

5. Drive device according to Claim 4, **characterized in that** the first charge-air line (7) is configured to rise continuously starting from the charge-air outlet (3a) of the compressor (3) to the charge-air inlet (8a) of the charge-air cooler (8).

6. Drive device according to Claim 4 or 5, **characterized by** a condensate discharge line (10) which is connected at one end to the condensate outlet opening (6) and opens at the other end into a second charge-air line (9) which feeds charge air cooled by the charge-air cooler (8) to the internal combustion engine (20).

7. Drive device according to Claim 6, **characterized in that** the condensate discharge line (10) opens into the second charge-air line (9) at a charge-air inlet (20a) of the internal combustion engine (20) or directly upstream of the charge-air inlet (20a).

8. Drive device according to either of Claims 6 and 7, **characterized in that** the condensate discharge line (10) has a reservoir (11) for receiving condensate.

9. Drive device according to one of Claims 6 to 8, **characterized in that** a return check valve (16) is arranged in the condensate discharge line (10) and prevents a return flow into the compressor (3) of condensate or air which has emerged from the condensate outlet opening (6).

10. Drive device according to Claims 8 and 9, **characterized in that** the reservoir (11) is arranged between the condensate outlet opening (6) and the return check valve (16).

11. Drive device according to one of Claims 6-10, **characterized in that** the condensate discharge line (10) is configured to be heatable.

12. Motor vehicle, in particular commercial vehicle, having an exhaust-gas turbocharger (3) according to one of Claims 1 to 3 or a drive device (1) according to one of Claims 4 to 11.

## Revendications

1. Turbocompresseur (2) pour un véhicule automobile, dans lequel un compresseur (3) du turbocompresseur (2) présente
- une entrée d'air de suralimentation,
- une sortie d'air de suralimentation (3a), et
- une ouverture d'évacuation de condensat (6), qui est disposée au point géodésiquement le plus bas d'un chemin d'écoulement d'air de suralimentation du compresseur (3),
**caractérisé en ce que** l'ouverture d'évacuation de condensat (6) est disposée au point géodésiquement le plus bas d'une spirale de pression du compresseur (3).

2. Turbocompresseur selon la revendication 1, **caractérisé en ce que** l'ouverture d'évacuation de condensat (6) est prévue dans une enveloppe de compresseur du turbocompresseur (2), en particulier au point géodésiquement le plus bas de l'enveloppe de compresseur.

3. Turbocompresseur selon la revendication 1 ou 2, **caractérisé en ce que** l'ouverture d'évacuation de condensat (6) est réalisée sous la forme d'un raccord pour une conduite d'évacuation de condensat (10).

4. Dispositif d'entraînement (1) pour un véhicule automobile, en particulier pour un véhicule utilitaire, comprenant un turbocompresseur (2) selon l'une quelconque des revendications 1 à 3, un moteur à combustion interne (20) suralimenté par le turbocompresseur (2), un refroidisseur d'air de suralimentation (8) pour le refroidissement de l'air de suralimentation comprimé par le compresseur (3) du turbocompresseur (2) et une première conduite d'air de suralimentation (7), qui relie une sortie d'air de suralimentation (3a) du compresseur (3) à une entrée d'air de suralimentation (8a) du refroidisseur d'air de suralimentation (8).

5. Dispositif d'entraînement selon la revendication 4, **caractérisé en ce que** la première conduite d'air de suralimentation (7) est réalisée sous forme montante continue à partir de la sortie d'air de suralimentation (3a) du compresseur (3) vers l'entrée d'air de suralimentation (8a) du refroidisseur d'air de suralimentation (8).

6. Dispositif d'entraînement selon la revendication 4 ou 5, **caractérisé par** une conduite d'évacuation de condensat (10), qui est raccordée par une extrémité à l'ouverture d'évacuation de condensat (6) et qui débouche par l'autre extrémité dans une deuxième conduite d'air de suralimentation (9), qui fournit au moteur à combustion interne (20) de l'air de suralimentation refroidi par le refroidisseur d'air de suralimentation (8) .

7. Dispositif d'entraînement selon la revendication 6, **caractérisé en ce que** la conduite d'évacuation de condensat (10) débouche dans la deuxième conduite d'air de suralimentation (9) à une entrée d'air de suralimentation (20a) du moteur à combustion interne (20) ou directement avant l'entrée d'air de suralimentation (20a) .

8. Dispositif d'entraînement selon une des revendications 6 ou 7, **caractérisé en ce que** la conduite d'évacuation de condensat (10) présente un réservoir (11) destiné à contenir le condensat.

9. Dispositif d'entraînement selon l'une quelconque des revendications 6 à 8, **caractérisé en ce qu'**une soupape anti-retour (16) est disposée dans la conduite d'évacuation de condensat (10), laquelle empêche un reflux de condensat ou d'air sorti par l'ouverture d'évacuation de condensat (6) dans le compresseur (3).

10. Dispositif d'entraînement selon les revendications 8 et 9, **caractérisé en ce que** le réservoir (11) est disposé entre l'ouverture d'évacuation de condensat (6) et la soupape anti-retour (16).

11. Dispositif d'entraînement selon l'une quelconque des revendications 6 à 10, **caractérisé en ce que** la conduite d'évacuation de condensat (10) peut être chauffée.

12. Véhicule automobile, en particulier véhicule utilitaire, doté d'un turbocompresseur (3) selon l'une quelconque des revendications 1 à 3 ou d'un dispositif d'entraînement (1) selon l'une quelconque des revendications 4 à 11.
